# EUROPEAN PATENT SPECIFICATION

(11) **EP 3 960 587 B1**
(45) Date of publication and mention of the grant of the patent: **06.11.2024**
(21) Application number: 19925641.3
(22) Date of filing: 16.07.2019
(51) Int. Cl.: B62D 6/00, B62D 5/04, B62D 15/02

(54) **VEHICLE STEERING DEVICE**
FAHRZEUGLENKVORRICHTUNG
DISPOSITIF DE DIRECTION DE VÉHICULE

(30) Priority: 23.04.2019 JP 2019081468
(43) Date of publication of application: 02.03.2022
(73) Proprietor: MITSUBISHI ELECTRIC CORPORATION, Chiyoda-ku Tokyo 100-8310 (JP)
(72) Inventor: NATSUHARA, Hiroya, Tokyo 100-8310 (JP); KEZOBO, Isao, Tokyo 100-8310 (JP); NAKAJIMA, Shunsuke, Tokyo 100-8310 (JP); ENDO, Masaya, Tokyo 100-8310 (JP); YAMAMOTO, Munenori, Tokyo 100-8310 (JP)
(74) Representative: Hoffmann Eitle
(86) International application number: PCT/JP2019/027897
(87) International publication number: WO 2020/217550

(56) References cited:
- WO-A1-2009/078074
- DE-A1- 4 333 161
- JP-A- 2004 045 087
- JP-A- 2004 345 460
- JP-A- 2015 232 761
- JP-A- H06 107 206
- JP-A- H09 326 282
- JP-B1- 6 493 644
- US-A1- 2007 233 345
- US-A1- 2017 166 241
- US-B2- 10 207 738

## Description

### Technical Field

The present disclosure relates to a vehicle steering system.

### Background Art

A vehicle steering system in which a motor is controlled so as to change a steering angle in accordance with the target route of a vehicle is well known. In a vehicle steering system of this type, distortion in a vehicle steering mechanism may cause a hysteresis between a steering angle, as a rotation angle of a steering shaft, and a turning angle, as a rotation angle of a vehicle turning wheel.

To date, there has been a vehicle steering system in which an element angle calculation means for correcting a hysteresis between a steering angle and a turning angle is provided and in which in the case where it is determined that a hysteresis has occurred between the steering angle and the turning angle, the element angle calculation means provides the hysteresis to a target steering angle so that the hysteresis is corrected (e.g., refer to Patent Document 1) .

In addition, to date, there has been an electric power steering apparatus in which a steering component is removed from a dynamic state quantity such as a rotation speed signal by use of a small-amplitude filtration filter for filtering small-amplitude components, and then only a vibration component, which is a component whose amplitude is smaller than the steering component, is accurately extracted so that the vibration component is reduced (e.g., refer to Patent Document 2).

### [Prior Art Reference]

### [Patent Literature]

[Patent Document 1] Japanese Patent Application Laid-Open No. 2016-135676
[Patent Document 2] International Publication No. WO2009/078074

Other vehicle steering systems are known from US 2017/166241 A1 and from DE 43 33 161 A1.

### Disclosure of the Invention

### Problems to be Solved by the Invention

In the conventional vehicle steering system disclosed in Patent Document 1, a hysteresis included in the output of a steering angle sensor is not taken into consideration. Accordingly, in the case where a hysteresis behind a change in a steering angle exists in a detected steering angle to be outputted from a steering angle sensor, the detected steering angle does not change in a hysteresis section, even when the steering angle changes. In particular, because in the case of turn-back steering, a phenomenon that even when a steering angle changes, the detected steering angle does not change in a hysteresis section conspicuously occurs, the detected steering angle suddenly changes at a timing when the steering angle becomes out of the hysteresis section; therefore, feeling of discontinuity occurs during the steering. Moreover, because the steering angle becomes larger than an intended target steering angle by a hysteresis amount, the traveling route of a vehicle may largely deviate from a target route. Moreover, although provided with a technique for decreasing vibration components in an electric signal, the conventional electric power steering apparatus disclosed in Patent Document 2 has no technology for correcting the deviation of a detected steering angle.

The present disclosure discloses a technology for solving the foregoing problems in conventional apparatuses; the objective thereof is to provide a vehicle steering system that reduces the effect of a hysteresis included in the output of a vehicle sensor so that accurate and smooth steering can be performed.

### Means for Solving the Problems

The present invention is defined in the independent claims.

Embodiments of the present invention are given in the dependent claims.

### Advantage of the Invention

There can be obtained a vehicle steering system that reduces the effect of a hysteresis included in the output of a vehicle sensor so that accurate and smooth steering can be performed.

There can be obtained a vehicle steering system that reduces the effect of a hysteresis included in the output of a vehicle sensor so that accurate and smooth steering can be performed.

### Brief Description of the Drawings

FIG. 1 is an overall configuration diagram of a vehicle steering system according to each of Embodiments 1 and 2;
FIG. 2A is a characteristic chart representing the relationship between a real steering angle and a detected steering angle obtained to be equal to a difference between the yaw rate and a target yaw rate, which is a target value of the yaw rate, based on the target yaw rate, the detected yaw rate, and the hysteresis estimation value.

### Advantage of the Invention

A vehicle steering system disclosed in the present disclosure includes
a steering mechanism that drives a vehicle,
a motor that makes the steering mechanism rotate,
a steering angle sensor that detects a steering angle, which is a rotation angle of the steering mechanism, and outputs a detected steering angle having a hysteresis with respect to the steering angle,
a hysteresis estimation unit that estimates a hysteresis estimation value corresponding to a difference between the steering angle and the detected steering angle, and
a control unit that controls the motor in such a way as to be equal to a difference between the steering angle and a target steering angle, which is a target value of the steering angle, based on the target steering angle, the detected steering angle, and the hysteresis estimation value. Therefore, there can be obtained a vehicle steering system that reduces the effect of a hysteresis included in the output of a vehicle sensor so that accurate and smooth steering can be performed.

A vehicle steering system disclosed in the present disclosure includes
a steering mechanism that drives a vehicle,
a motor that makes the steering mechanism rotate,
a yaw-rate sensor that detects a yaw rate of the vehicle and outputs a detected yaw rate having a hysteresis with respect to the yaw rate,
a hysteresis estimation unit that estimates a hysteresis estimation value corresponding to a difference between the yaw rate and the detected yaw rate, and
a control unit that controls the motor in such a way as to be equal to a difference between the yaw rate and a target yaw rate, which is a target value of the yaw rate, based on the target yaw rate, the detected yaw rate, and the hysteresis estimation value. Therefore, there can be obtained a vehicle steering system that reduces the effect of a hysteresis included in the output of a vehicle sensor so that accurate and smooth steering can be performed.

### Brief Description of the Drawings

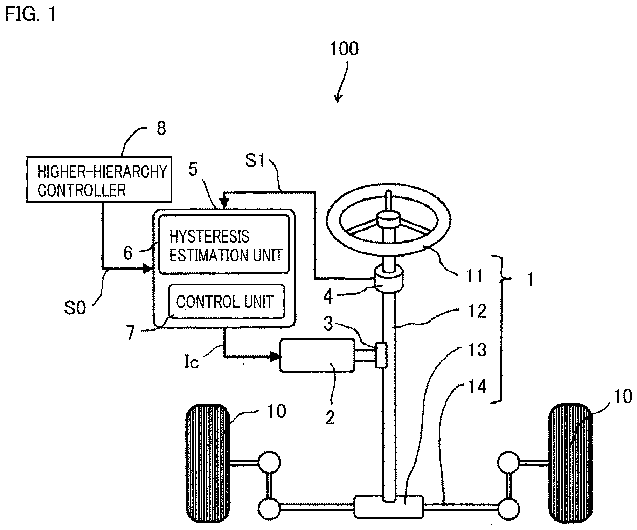

FIG. 1 is an overall configuration diagram of a vehicle steering system according to each of Embodiments 1 and 2;

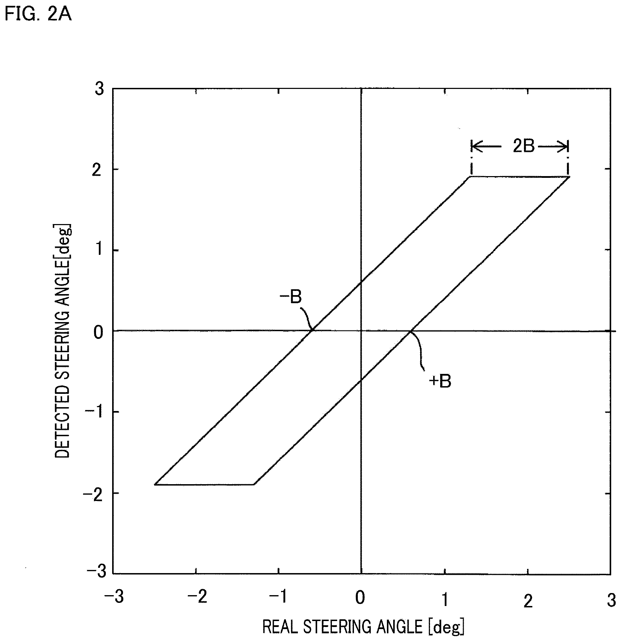

FIG. 2A is a characteristic chart representing the relationship between a real steering angle and a detected steering angle obtained by a steering angle sensor;

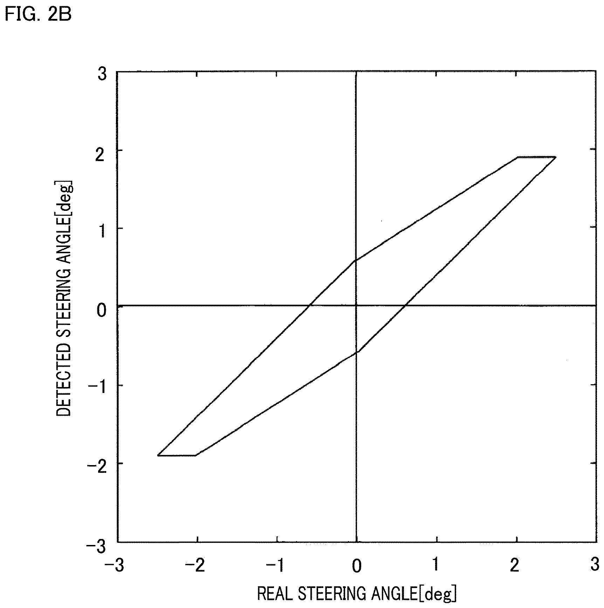

FIG. 2B is a characteristic chart representing the relationship between a real steering angle and a detected steering angle obtained by a steering angle sensor;

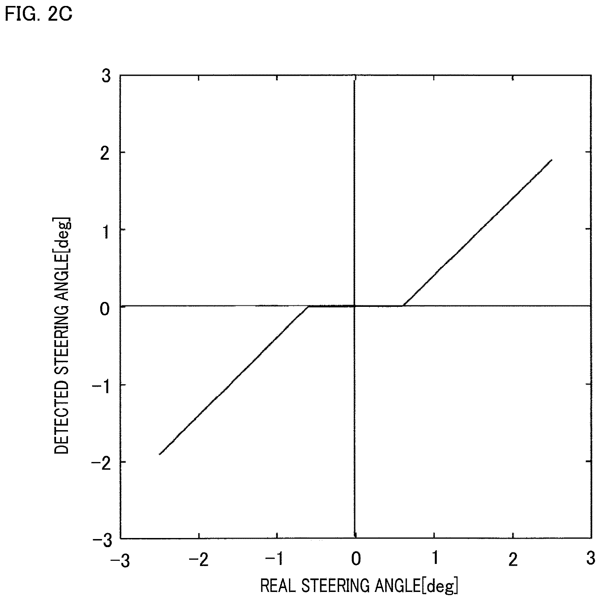

FIG. 2C is a characteristic chart representing the relationship between a real steering angle and a detected steering angle obtained by a steering angle sensor;

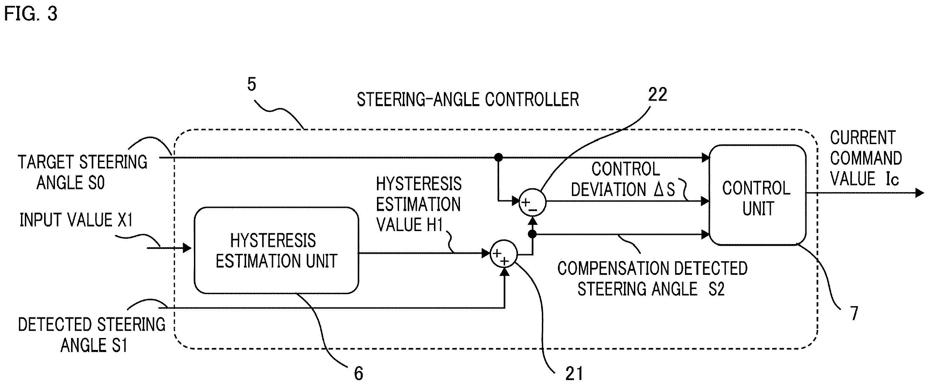

FIG. 3 is a configuration diagram of a steering-angle controller in the vehicle steering system according to each of Embodiments 1 and 2;

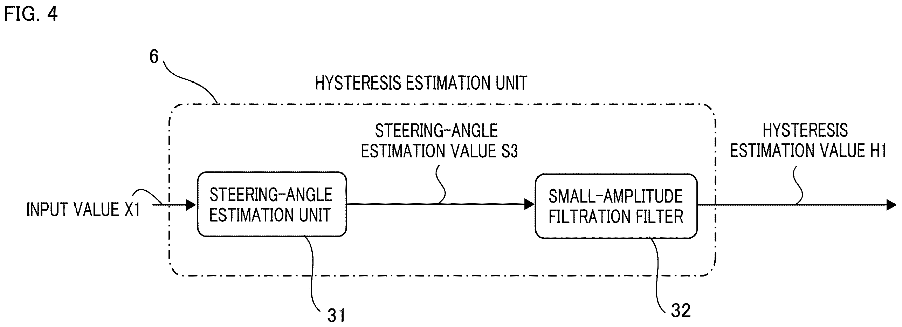

FIG. 4 is a configuration diagram of a hysteresis estimation unit in the vehicle steering system according to each of Embodiments 1 and 2;

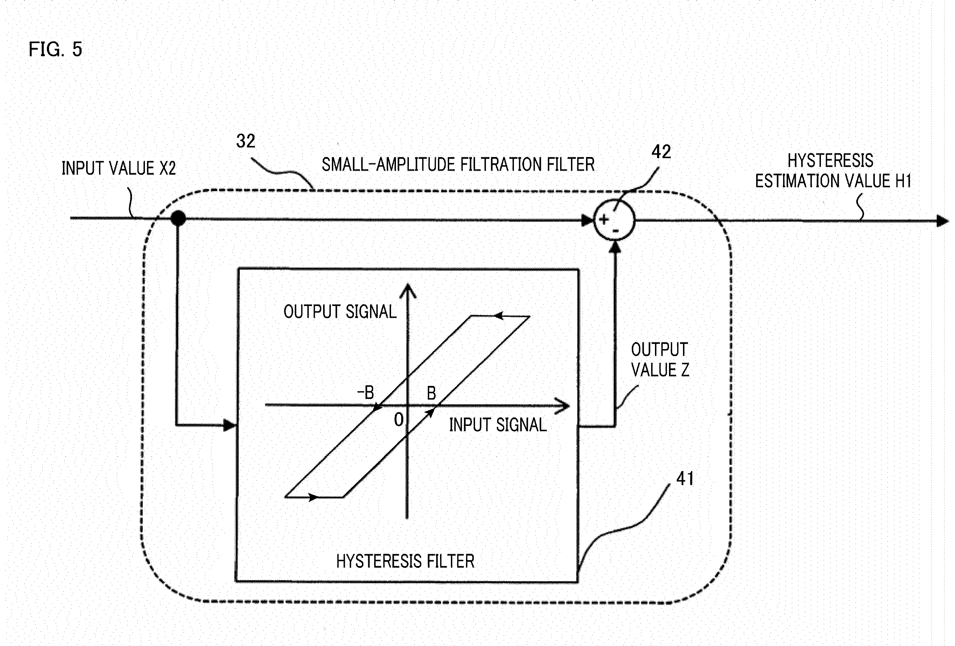

FIG. 5 is a configuration diagram of a small-amplitude filtration filter in the vehicle steering system according to each of Embodiments 1 and 2 and in a vehicle steering system according to each of Embodiments 3 and 4;

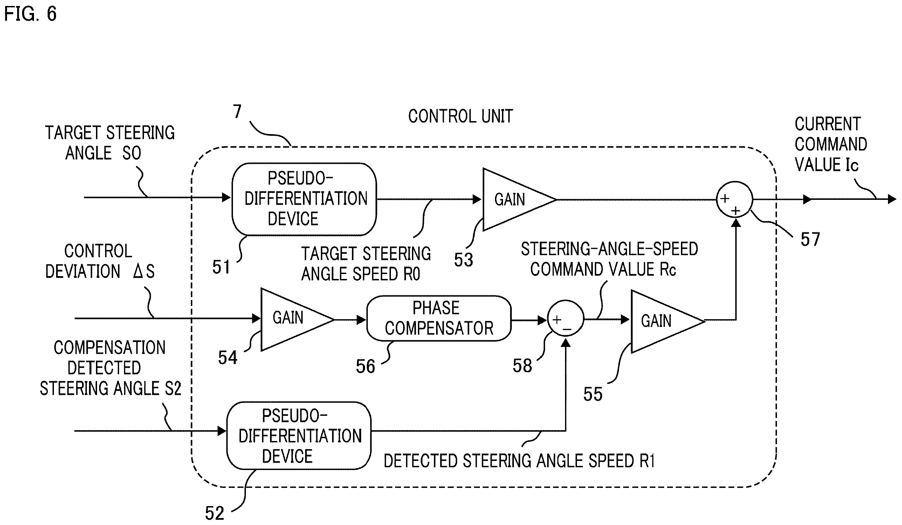

FIG. 6 is a configuration diagram of a control unit in the vehicle steering system according to each of Embodiments 1 and 2;

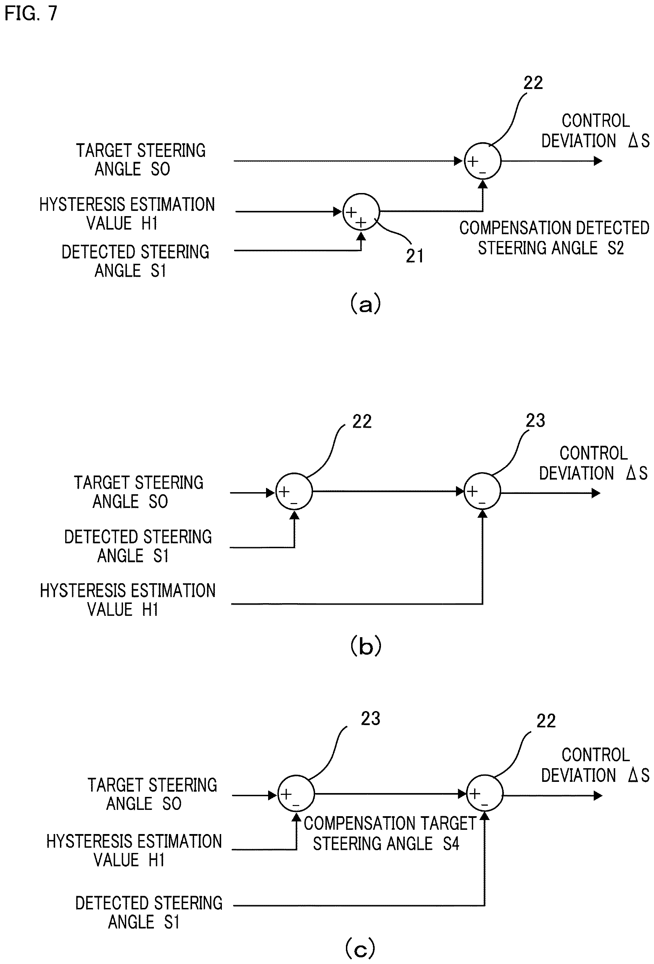

FIG. 7 is a set of explanatory diagrams representing various kinds of configuration examples in each of which a control deviation is created by use of a hysteresis estimation value, in the vehicle steering system according to each of Embodiments 1 and 2;

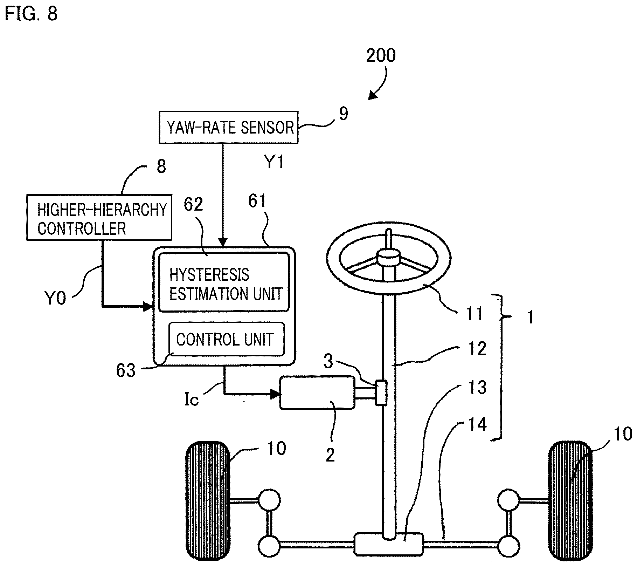

FIG. 8 is an overall configuration diagram of the vehicle steering system according to each of Embodiments 3 and 4;

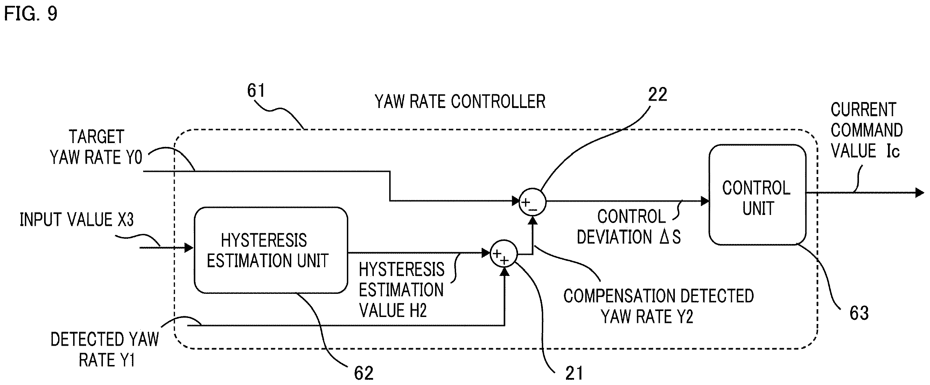

FIG. 9 is a configuration diagram of a yaw-rate controller in the vehicle steering system according to each of Embodiments 3 and 4;

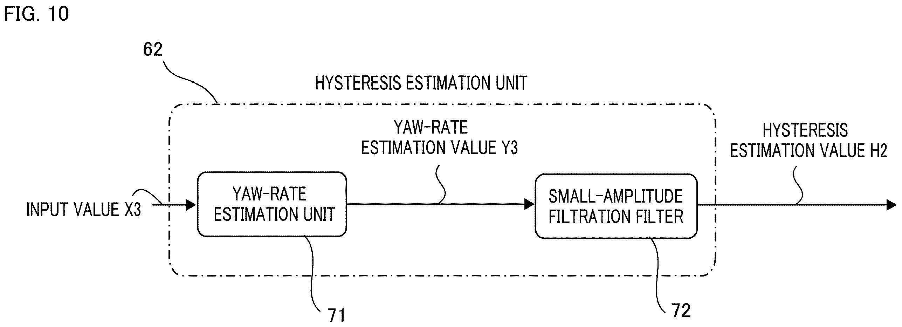

FIG. 10 is a configuration diagram of a hysteresis estimation unit in the vehicle steering system according to each of Embodiments 3 and 4;

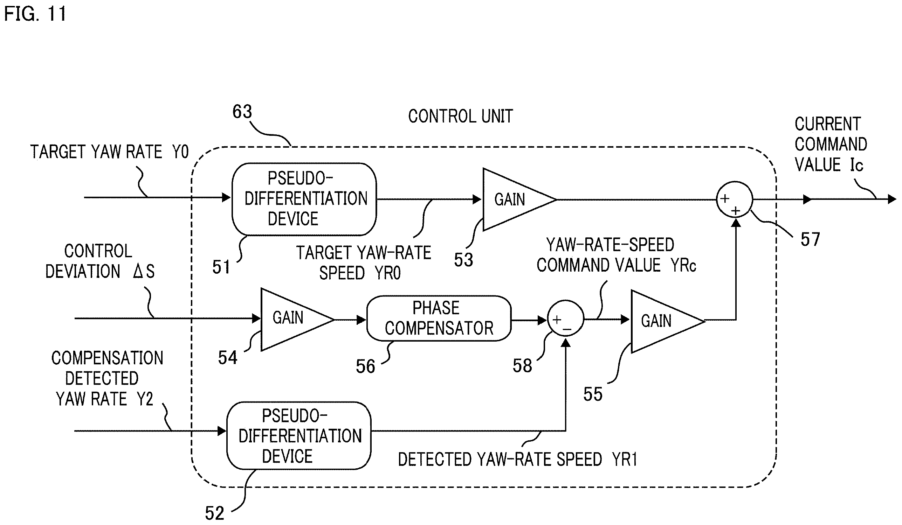

FIG. 11 is a configuration diagram of a control unit in the vehicle steering system according to each of Embodiments 3 and 4;

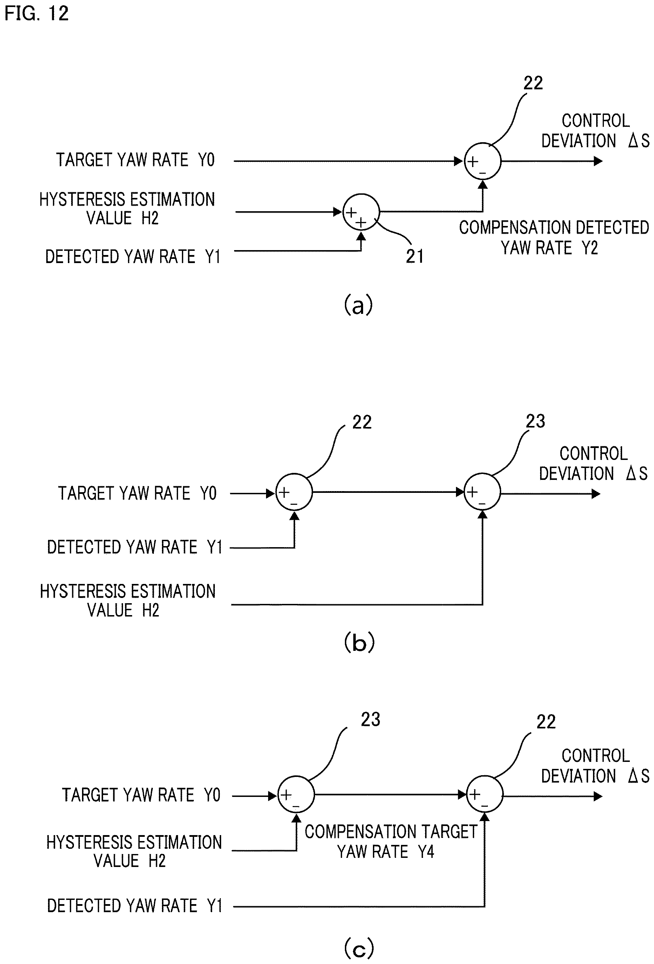

FIG. 12 is explanatory diagrams representing various kinds of configuration examples in each of which a control deviation is created by use of a hysteresis estimation value, in the vehicle steering system according to each of Embodiments 3 and 4; and

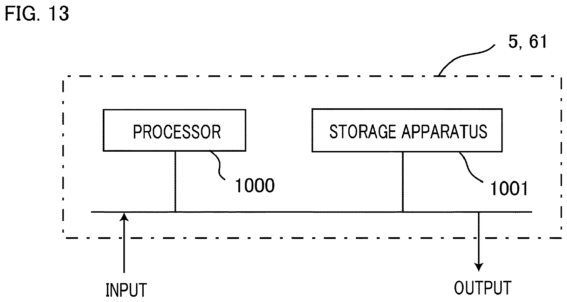

FIG. 13 is a block diagram representing the hardware configuration of each of the steering-angle controller according to Embodiment 1 and the yaw-rate controller according to Embodiment 2.

### Detailed Description of the Embodiments

### Embodiment 1.

FIG. 1 is an overall configuration diagram of a vehicle steering system according to each of Embodiments 1 and 2. In FIG. 1, a vehicle steering system 100 is provided with a steering mechanism 1 for steering a vehicle, a motor 2 that makes the steering mechanism 1 rotate through the intermediary of a motor-speed reduction gear 3, a steering angle sensor 4 that detects a steering angle, which is a rotation angle of the steering mechanism 1, and then outputs a detected steering angle S1, and a steering-angle controller 5. The steering-angle controller 5 is provided with a hysteresis estimation unit 6 that outputs an after-mentioned hysteresis estimation value H1 corresponding to a deviation between the detected steering angle S1 and a real steering angle, which is an actual steering angle, and a control unit 7 that creates a current command value Ic, based on a target steering angle S0 to be outputted from a higher-hierarchy controller 8, the detected steering angle S1, and the hysteresis estimation value H1. The current command value Ic outputted from the control unit 7 is transferred to a motor control apparatus (unillustrated) for controlling the motor 2. Based on the current command value Ic, the motor control apparatus controls an inverter apparatus configured with, for example, semiconductor switching devices in such a way that a motor current follows the current command value Ic. The motor control apparatus including the inverter apparatus may be incorporated in the control unit 7.

The control unit 7 provides the current command value Ic, created based on a deviation between the target steering angle S0 and the detected steering angle S1, to the motor control apparatus so as to control a motor current Im, and drives the motor 2 in such a way that the steering angle follows the target steering angle S0, so that the steering mechanism 1 rotates. The detected steering angle S1 to be outputted from the steering angle sensor 4 includes a hysteresis behind a change in a real steering angle.

The steering mechanism 1 includes a steering wheel 11 to be operated by a vehicle driver, a steering shaft 12 coupled with the steering wheel 11, a rack-and-pinion gear 13 to be driven by the steering shaft 12, and a rack 14 that is driven by the rack-and-pinion gear 13 so as to turn a pair of turning wheels 10. The foregoing steering angle sensor 4 measures a real steering angle, which is a rotation amount of the steering shaft 12, outputs the detected steering angle S1 corresponding to the real steering angle, and then inputs the detected steering angle S1 to the steering-angle controller 5. The higher-hierarchy controller 8 calculates a target route of the vehicle, outputs the target steering angle S0 for making the traveling route of the vehicle follow the calculated target route, and then inputs the target steering angle S0 to the steering-angle controller 5.

Based on the detected steering angle S1 obtained from the steering angle sensor 4 and the target steering angle S0, the steering-angle controller 5 calculates the current command value Ic and then provides the current command value Ic to the motor control apparatus for controlling the motor 2. The motor current Im is controlled by the motor control apparatus so as to follow the current command value Ic and is supplied to the motor 2. The motor 2 generates torque corresponding to the supplied motor current Im. The torque generated by the motor 2 is transferred to the steering shaft 12 through the intermediary of the motor-speed reduction gear 3 and is further transferred to the rack 14 through the intermediary of the rack-and-pinion gear 13. The rack 14 is driven in the axial direction thereof by the rack-and-pinion gear 13 so as to turn the pair of the turning wheels 10.

FIG. 2A is a characteristic chart representing the relationship between the real steering angle and the detected steering angle obtained by the steering angle sensor; a case where a hysteresis is included in the detected steering angle is represented. In FIG. 2A, the abscissa denotes the real steering angle [deg], and the ordinate denotes the detected steering angle [deg].

As represented in FIG. 2A, the detected steering angle includes a hysteresis of a dead-zone width 2B behind a change in the real steering angle. Therefore, when the rotation direction of the real steering angle starts to be reversed, the change in the detected steering angle is delayed due to the hysteresis. In the case where in steering-angle control, it is tried to make the target steering angle S0 and the detected steering angle S1 coincide with each other, the deviation between the target steering angle S0 and the detected steering angle S1 increases during the hysteresis section, because the detected steering angle S1 does not change; when the real steering angle falls out of the hysteresis section, the motor is driven based on the increased deviation and hence the real steering angle may suddenly change. Moreover, in a steady state, because the detected steering angle S1 has an error of the hysteresis width 2B with respect to the real steering angle, there may be a probability that the traveling route of the vehicle deviates from the target route. However, in the vehicle steering system according to Embodiment 1, as described later, the steering angle does not suddenly change; thus, the traveling route of the vehicle does not deviate from the target route.

FIG. 3 is a configuration diagram of a steering-angle controller in the vehicle steering system according to each of Embodiments 1 and 2; the configuration of the steering-angle controller 5 in which hysteresis compensation is introduced is represented. In FIG. 3, the steering-angle controller 5 has the hysteresis estimation unit 6, an addition unit 21, a deviation calculation unit 22, and the control unit 7. Based on an input value X1 to be inputted, the hysteresis estimation unit 6 calculates and outputs the hysteresis estimation value H1. The addition unit 21 adds the detected steering angle S1 detected by the steering angle sensor 4 and the hysteresis estimation value H1, and then outputs the addition value, as a compensation detected steering angle S2.

The deviation calculation unit 22 subtracts the compensation detected steering angle S2 from the target steering angle S0 inputted from the higher-hierarchy controller 8 and then outputs a control deviation ΔS. Based on the inputted control deviation ΔS, the target steering angle S0, and the compensation detected steering angle S2, the control unit 7 calculates the current command value Ic and then inputs the current command value Ic to the motor control apparatus for controlling the motor 2. The motor current Im flowing in the motor 2 is controlled by the motor control apparatus so as to follow the current command value Ic.

FIG. 4 is a configuration diagram of a hysteresis estimation unit in the vehicle steering system according to each of Embodiments 1 and 2. In FIG. 4, the hysteresis estimation unit 6 has a steering-angle estimation unit 31 and an after-mentioned small-amplitude filtration filter 32. The steering-angle estimation unit 31 inputs a steering-angle estimation value S3, calculated based on the input value X1, to the small-amplitude filtration filter 32. The small-amplitude filtration filter 32 outputs the hysteresis estimation value H1, based on the steering-angle estimation value S3 inputted from the steering-angle estimation unit 31.

Because having a frequency responsiveness for making the input value X1 approach the real steering angle, the steering-angle estimation unit 31 raises the accuracy of hysteresis estimation by the hysteresis estimation unit 6. In Embodiment 1, as the input value X1 to be inputted to the hysteresis estimation unit 6, the target steering angle S0 is utilized. The reason therefor is that in the case where the responsiveness of the steering-angle control is high, it can be assumed that the target steering angle S0 and the real steering angle almost approximate each other. In practice, because the real steering angle follows the target steering angle S0 in a delayed manner, the steering-angle estimation unit 31 makes an approximation of the follow-up delay.

Specifically, with regard to the real vehicle, the frequency responsiveness of the steering-angle controller 5 is measured so as to obtain the inherent frequency of the steering-angle controller 5; then, the target steering angle S0, as the input value X1, is processed through a lowpass filter having the inherent frequency, so that there is created the steering-angle estimation value S3 having a waveform approximate to the waveform of the real steering angle. Through the result of measurement in the real vehicle, the applicant ascertained that the delay of the steering-angle control is approximately from 0.5 [Hz] to 2.0 [Hz] . Thus, the steering control apparatus according to Embodiment 1 is configured in such a way that the steering angle is estimated by use of a lowpass filter having an inherent frequency of approximately from 0.5 [Hz] to 2.0 [Hz], as the steering-angle estimation unit 31. The steering-angle estimation value S3 to be outputted from the steering-angle estimation unit 31 is for estimating nothing but the hysteresis of the sensor; therefore, it is not required that the steering-angle estimation value S3 is created with a high estimation accuracy to the extent that the steering-angle estimation value S3 completely coincide with the real steering angle.

Next, the small-amplitude filtration filter 32 will be explained. FIG. 5 is a configuration diagram of a small-amplitude filtration filter in the vehicle steering system according to each of Embodiments 1 and 2 and in a vehicle steering system according to each of Embodiments 3 and 4. A small-amplitude filtration filter is utilized also in foregoing Patent Document 2; however, the application thereof is to extract vibration components in control of an electric power steering apparatus. In Embodiment 1 according to the present disclosure, the small-amplitude filtration filter 32 is utilized for extracting a hysteresis-related signal from a detected steering angle detected by the steering angle sensor in the steering-angle control.

In FIG. 5, the small-amplitude filtration filter 32 includes a hysteresis filter 41 for performing hysteresis-function processing and a subtractor 42. The hysteresis filter 41 applies hysteresis-function processing to an input value X2 and then outputs the processed value, as an output value Z. The hysteresis for applying the hysteresis-function processing to the input value X2 is set in such a way as to have a sensor hysteresis characteristic including a width and a history that are preliminarily measured in the real vehicle.

In Embodiment 1, it is assumed that the hysteresis of the vehicle has the hysteresis characteristic represented in foregoing FIG. 2A; therefore, it is desirable that a hysteresis characteristic the same as that in FIG. 2A is provided also to the hysteresis function of the hysteresis filter 41. The subtractor 42 outputs, as the hysteresis estimation value H1, a value obtained by subtracting the output value Z of the hysteresis filter 41 from the input value X2 of the hysteresis filter 41. In Embodiment 1, as the input value X2 to be inputted to the small-amplitude filtration filter 32, the steering-angle estimation value S3 outputted from the steering-angle estimation unit 31 is utilized.

Next, the control unit 7 will be explained. FIG. 6 is a configuration diagram of a control unit in the vehicle steering system according to each of Embodiments 1 and 2. In FIG. 6, the control unit 7 includes a first pseudo-differentiation device 51, a second pseudo-differentiation device 52, a first gain 53, a second gain 54, a third gain 55, a phase compensator 56, an addition unit 57, and a subtraction unit 58. The control unit 7 represented in FIG. 6 basically performs feedback control in such a way as to suppress the foregoing control deviation ΔS.

A target steering angle speed R0 is created from the target steering angle S0 by means of the first pseudo-differentiation device 51; a value obtained by multiplying the target steering angle speed R0 by the first gain 53 is inputted to the addition unit 57. A steering-angle-speed command value Rc is created from the control deviation ΔS through processing by the second gain 54 and the phase compensator 56; then, the steering-angle-speed command value Rc is inputted to the subtraction unit 58. The second gain 54 and the phase compensator 56 are designed in such a way as to create the steering-angle-speed command value Rc in which desired stability and trackability to the control deviation ΔS are secured. A detected steering angle speed R1 is created from the compensation detected steering angle S2 through the second pseudo-differentiation device 52; then, the detected steering angle speed R1 is inputted to the subtraction unit 58.

The detected steering angle speed R1 is subtracted from the steering-angle-speed command value Rc by the subtraction unit 58; a value calculated by multiplying the value obtained through the subtraction by the third gain 55 is inputted to the addition unit 57. The addition unit 57 adds a value obtained by multiplying the foregoing target steering angle speed R0 by the first gain 53 and a value obtained by multiplying a value, obtained by subtracting the detected steering angle speed R1 from the steering-angle-speed command value Rc, by the third gain 55, and then outputs the added value, as the current command value Ic.

In order to raise the stability, the control unit 7 represented in FIG. 6 includes a major loop of feedback control utilizing the target steering angle speed R0 obtained from the target steering angle S0 and the steering-angle-speed command value Rc obtained from the control deviation ΔS and a minor loop of feedback control utilizing the detected steering angle speed R1 obtained from the compensation detected steering angle S2 and the steering-angle-speed command value Rc obtained from the control deviation ΔS. In addition, in the control unit 7, there is configured cascade control in which the feedback control utilizing the foregoing minor loop is added to the feedback control utilizing the foregoing major loop.

Because in the control unit 7 represented in FIG. 6, not the detected steering angle S1 but the compensation detected steering angle S2 to which hysteresis compensation has been provided is utilized, the effect of a hysteresis included in the detected steering angle S1 from the steering angle sensor 4 is reduced and hence the steering control can more accurately be performed. Moreover, in order to raise the responsiveness, feed-forward control of the target yaw rate speed YR0 is added.

As described above, Embodiment 1 makes it possible that in steering-angle control in a vehicle steering system, the hysteresis in a steering angle sensor is estimated and compensated; thus, smooth steering in which the effect of the hysteresis is reduced can be performed.

In foregoing Embodiment 1, in the steering-angle controller 5, as explained in FIG. 3, the hysteresis estimation unit 6 creates the hysteresis estimation value H1; the addition unit 21 adds the detected steering angle S1 and the hysteresis estimation value H1 so as to create the compensation detected steering angle S2; then, the deviation calculation unit 22 subtracts the compensation detected steering angle S2 from the target steering angle S0 so as to create the control deviation ΔS. However, as the configuration in which the control deviation ΔS is created by use of the hysteresis estimation value H1, there exist configurations other than the one represented in FIG. 3.

FIG. 7 is a set of explanatory diagrams representing various kinds of configuration examples in each of which a control deviation is created by use of a hysteresis estimation value, in the vehicle steering system according to each of Embodiments 1 and 2. The configuration represented in (a) of FIG. 7 corresponds to the configuration represented in FIG. 3; the hysteresis estimation value H1 is added to the detected steering angle S1 so that the compensation detected steering angle S2 is created; then, the compensation detected steering angle S2 is subtracted from the target steering angle S0 so that the control deviation ΔS is created. The reference numeral 23 denotes a subtractor.

It may be allowed that as the configuration represented in (b) of FIG. 7, which replaces the configuration represented in (a) of FIG. 7, the control deviation ΔS is created by subtracting the hysteresis estimation value H1 from a value obtained by subtracting the detected steering angle S1 from the target steering angle S0; alternatively, it may be allowed that as the configuration represented in (c) of FIG. 7, the hysteresis estimation value H1 is subtracted from the target steering angle S0 so that a compensation target steering angle S4 is created and then the detected steering angle S1 is subtracted from the compensation target steering angle S4 so that the control deviation ΔS is obtained. The configuration represented in each of (a), (b), and (c) of FIG. 7 provides the same effect.

Moreover, in Embodiment 1, the steering-angle estimation unit 31 obtains the steering-angle estimation value S3 by use of a transfer function; however, it may be allowed that in order to reduce the calculation load, the steering-angle estimation value S3 is obtained by use of a mere gain. Furthermore, it may be allowed that in order to raise the estimation accuracy of the steering-angle estimation unit 31, nonlinear processing such as saturation processing or dead-zone processing is performed.

Still moreover, as the hysteresis filter 41 in the small-amplitude filtration filter 32, a filter having an ideal hysteresis characteristic represented in FIG. 2A is utilized; it is important to make the characteristic of the hysteresis filter 41 coincide with the hysteresis characteristic of the steering angle sensor. For example, in the case where as represented in FIG. 2B, the hysteresis characteristic of the steering angle sensor has a shape in which in comparison with the hysteresis characteristic in FIG. 2A, the lower-right and upper-left corner portions of the hysteresis loop are suppressed, a hysteresis filter having a hysteresis characteristic coinciding with that particular hysteresis characteristic is utilized. In addition, in the case where as represented in FIG. 2C, the hysteresis characteristic of the steering angle sensor has a dead zone in the vicinity of the origin, a hysteresis filter having a characteristic coinciding with that particular characteristic is utilized. As described above, the accuracy of the hysteresis estimation value H1 can be raised by making the hysteresis characteristic of the hysteresis filter 41 coincide with the hysteresis characteristic of the steering angle sensor.

In the above explanation, it is assumed that a hysteresis exists in the relationship between the steering angle and the detected steering angle; however, the generating factor of the hysteresis is not particularly limited. For example, even when the generation of the hysteresis is caused by the characteristic of the steering angle sensor itself, by a mechanical backlash of the steering mechanism for making the steering angle sensor rotate, or further by both thereof, the vehicle steering system according to Embodiment 1 can be utilized and the same effect can be demonstrated.

### Embodiment 2.

Next, a vehicle steering system according to Embodiment 2 will be explained. In Embodiment 1, as described above, as the input value X1 to be inputted to the hysteresis estimation unit 6, the target steering angle S0 is utilized. However, in the case where the control responsiveness is low or under the environment in which disturbance such as friction exists, the difference between the target steering angle S0 and the steering angle becomes large; therefore, in the configuration according to Embodiment 1, estimation of the hysteresis may become inaccurate. In Embodiment 2, the vehicle steering system is configured in such a way that estimation of a hysteresis is performed by inputting an input value other than a target steering angle to the hysteresis estimation unit 6. Hereinafter, the vehicle steering system according to Embodiment 2 will be explained mainly with regard to the difference from the vehicle steering system according to Embodiment 1. FIGS. 1, 3, 4, 5, 6, and 7 are applied also to the vehicle steering system according to Embodiment 2.

The hysteresis estimation unit 6 according to Embodiment 2 is configured in such a way that the hysteresis estimation value H1 is calculated by use of the detected steering angle S1, as the input value X1 represented in FIG. 4. With this configuration, estimation of the hysteresis cannot be performed in a hysteresis section where the detected steering angle S1 does not move; however, in the section out of the hysteresis section, the detected steering angle S1 moves. Accordingly, in the situation where the fluctuation of the steering angle is sufficiently larger than the hysteresis width, the hysteresis can be estimated and hence the hysteresis estimation value H1 can be obtained.

As a variant example of Embodiment 2, the hysteresis estimation unit 6 is configured in such a way that the hysteresis estimation value H1 is calculated by use of an input value based on the yaw rate of a vehicle. Because when a vehicle pivots, a yaw rate occurs, it can be determined that steering has been started, based on the occurrence of the yaw rate. In addition, because the yaw rate is substantially proportional to each of the steering angle and the vehicle speed, the steering angle can be estimated based on the yaw rate and the vehicle speed.

In this case, as the input value X1, an input value based on a value detected by a yaw-rate sensor may be utilized; alternatively, the yaw rate and the hysteresis estimation value H1 may be calculated by use of an input value based on a vehicle condition such as the acceleration, the vehicle speed, or the rotational difference between the right and left wheels.

As an additional variant example of Embodiment 2, the hysteresis estimation value H1 may be calculated by use of a value based on the motor current Im, as the input value X1 to be inputted to the hysteresis estimation unit. In the case where there exists static friction between a road surface and a set of the steering mechanism and the turning wheels and the motor current Im is within a specific value, the static friction is large and hence the steering angle does not move; however, when the motor current Im exceeds the specific value, the steering angle overcomes the static friction and then starts to move. Because it is made possible to determine the occurrence of steering by use of the value of this motor current, as a current threshold value, the estimation of the hysteresis can more accurately be performed.

As described above, the vehicle steering system according to Embodiment 2 demonstrates an effect that even in the case where the difference between the target steering angle and the steering angle is large, it is made possible to estimate the hysteresis. In addition, as the input values, either a single kind of signal or two or more signals including a target steering angle may be utilized so as to estimate the hysteresis.

Each of foregoing Embodiments 1 and 2 is obtained by converting the vehicle steering system, described in one of the items (1) through (10) below, into a tangible form.
(1) A vehicle steering system comprising:
   a steering mechanism that drives a vehicle;
   a motor that makes the steering mechanism rotate;
   a steering angle sensor that detects a steering angle, which is a rotation angle of the steering mechanism, and outputs a detected steering angle having a hysteresis with respect to the steering angle;
   a hysteresis estimation unit that estimates a hysteresis estimation value corresponding to a difference between the steering angle and the detected steering angle; and
   a control unit that controls the motor in such a way as to be equal to a difference between the steering angle and a target steering angle, which is a target value of the steering angle, based on the target steering angle, the detected steering angle, and the hysteresis estimation value.
   In the vehicle steering system configured in such a manner as described above, compensation is made so as to cancel the hysteresis of the steering angle sensor; thus, steering can smoothly be performed. Moreover, the deviation between the traveling route and the target route of a vehicle can be suppressed.
(2) The vehicle steering system according to (1),
   wherein the hysteresis estimation unit is configured in such a way as to estimate the hysteresis estimation value corresponding to a difference obtained by subtracting the detected steering angle from the steering angle, and
   wherein the control unit is configured in such a way as to control the motor, based on a value obtained by subtracting the detected steering angle and the hysteresis estimation value from the target steering angle.
   In the vehicle steering system configured in such a manner as described above, addition and subtraction according to the foregoing signs are applied to the target steering angle, the detected steering angle, and the hysteresis estimation value, so that the control deviation becomes a value equal to the difference between the target steering angle and the steering angle; thus, there is demonstrated an effect that steering-angle control utilizing a desirable deviation input can be performed.
(3) The vehicle steering system according to any one of (1) and (2), wherein the hysteresis estimation unit is configured in such a way as to calculate the hysteresis estimation value, based on the target steering angle.
   In the vehicle steering system configured in such a manner as described above, there is demonstrated an effect that even in a section where as at a start of steering or as at a turnback of steering, the detected steering angle does not move, it is made possible to estimate the hysteresis.
(4) The vehicle steering system according to any one of (1) through (3), wherein the hysteresis estimation unit has a steering-angle estimation unit for estimating a response of the steering angle to an input value to the hysteresis estimation unit and is configured in such a way as to calculate the hysteresis estimation value, based on a steering-angle estimation value to be outputted from the steering-angle estimation unit.
   In the vehicle steering system configured in such a manner as described above, the input value is converted into a signal corresponding to the steering angle, so that the accuracy of hysteresis estimation can be raised.
(5) The vehicle steering system according to any one of (1) through (4), wherein the hysteresis estimation unit has a steering-angle estimation unit for outputting a steering-angle estimation value whose high-frequency phase is delayed with respect to the target steering angle, and is configured in such a way as to calculate the hysteresis estimation value, based on the steering-angle estimation value.
   In the vehicle steering system configured in such a manner as described above, a frequency response for making the target steering angle approach the steering angle is added, so that the accuracy of hysteresis estimation can be raised.
(6) The vehicle steering system according to any one of (1) through (5),
   wherein the hysteresis estimation unit has a small-amplitude filtration filter, and
   wherein the small-amplitude filtration filter includes a hysteresis filter for performing hysteresis-function processing having a hysteresis width corresponding to the hysteresis and a subtractor that subtracts an output signal of the hysteresis filter from an input signal of the hysteresis filter.
   In the vehicle steering system configured in such a manner as described above, there is demonstrated an effect that a simple logic makes it possible to extract a sensor hysteresis.
(7) The vehicle steering system according to any one of (1) through (6), wherein the hysteresis estimation unit is configured in such a way as to compensate a hysteresis of the steering angle sensor itself.
   In the vehicle steering system configured in such a manner as described above, the hysteresis of the steering angle sensor itself can be compensated.
(8) The vehicle steering system according to any one of (1) and (2), wherein the hysteresis estimation unit is configured in such a way as to calculate the hysteresis estimation value, based on the detected steering angle.
   In the vehicle steering system configured in such a manner as described above, there is demonstrated an effect that even in a situation where the target steering angle and the detected steering angle do not approximate each other, it is made possible to estimate the hysteresis.
(9) The vehicle steering system according to any one of (1) and (2), wherein the hysteresis estimation unit is configured in such a way as to calculate the hysteresis estimation value, based on a current in the motor.
   In the vehicle steering system configured in such a manner as described above, there is demonstrated an effect that even in a situation where the target steering angle and the detected steering angle do not approximate each other and a friction disturbance is included, it is made possible to estimate the hysteresis.
(10) The vehicle steering system according to any one of (1) and (2), wherein the hysteresis estimation unit is configured in such a way as to calculate the hysteresis estimation value, based on a yaw rate of the vehicle.
   In the vehicle steering system configured in such a manner as described above, there is demonstrated an effect that even in a situation where the target steering angle and the detected steering angle do not approximate each other and the detected steering angle does not move, it is made possible to estimate the hysteresis.

### Embodiment 3.

In each of Embodiments 1 and 2, the hysteresis of the detected steering angle S1 in steering-angle control is compensated. In contrast, in Embodiment 3, the hysteresis of a yaw rate in yaw-rate control is compensated. FIG. 8 is an overall configuration diagram of a vehicle steering system according to Embodiment 3.

In FIG. 8, the vehicle steering system according to Embodiment 3 performs yaw-rate control, instead of the steering-angle control in the vehicle steering system according to Embodiment 1; based on a detected yaw rate Y1 obtained from a yaw-rate sensor 9 and a target yaw rate Y0 created by the higher-hierarchy controller 8, the current command value Ic is created; then, the motor control apparatus is controlled based on this current command value Ic, so that the motor 2 is controlled.

In the case where the detected yaw rate Y1 includes a hysteresis, with respect to a yaw rate, that has a characteristic similar to the hysteresis characteristic represented in foregoing FIG. 2A, FIG. 2B, or FIG. 2C, a dead zone due to the hysteresis causes a delay in the detected yaw rate, when the yaw rate of the vehicle changes. In the case where in yaw-rate control, it is tried to make the target yaw rate Y0 and the detected yaw rate Y1 coincide with each other, the deviation between the target yaw rate Y0 and the detected yaw rate Y1 increases during the hysteresis section, because the detected yaw rate Y1 does not change; when the yaw rate falls out of the hysteresis section, the detected yaw rate Y1 is caused to suddenly change. Moreover, in a steady state, because the detected yaw rate Y1 has an error of a width B with respect to the yaw rate, required yaw-rate control cannot be performed. In the vehicle steering system according to Embodiment 3, as described later, the yaw rate does not suddenly change; thus, the traveling route of the vehicle does not deviate from the target route.

In FIG. 8, a vehicle steering system 200 is provided with the steering mechanism 1 for steering a vehicle, the motor 2 that makes the steering mechanism 1 rotate through the intermediary of the motor-speed reduction gear 3, the yaw-rate sensor 9 that detects a yaw rate and then outputs the detected yaw rate Y1, and a yaw rate controller 61. The yaw rate controller 61 is provided with a hysteresis estimation unit 62 that outputs an after-mentioned hysteresis estimation value H2 corresponding to a deviation between the detected yaw rate Y1 and a real yaw rate, which is an actual yaw rate, and a control unit 63 that creates the current command value Ic, based on the target yaw rate Y0 to be outputted from the higher-hierarchy controller 8, the detected yaw rate Y1, and the hysteresis estimation value H2. The current command value Ic outputted from the control unit 63 is transferred to a motor control apparatus (unillustrated) for controlling the motor 2. Based on the current command value Ic, the motor control apparatus controls an inverter apparatus configured with, for example, semiconductor switching devices in such a way that a motor current follows the current command value Ic. The motor control apparatus including the inverter apparatus may be incorporated in the control unit 63.

The control unit 63 provides the current command value Ic, created based on a deviation between the target yaw rate Y0 and the detected yaw rate Y1, to the motor control apparatus so as to control the motor current Im, and drives the motor 2 in such a way that the yaw rate follows the target yaw rate Y0, so that the steering mechanism 1 rotates. The detected yaw rate Y1 to be outputted from the yaw-rate sensor 9 includes a hysteresis with respect to a real yaw rate.

The steering mechanism 1 includes the steering wheel 11 to be operated by a vehicle driver, the steering shaft 12 coupled with the steering wheel 11, the rack-and-pinion gear 13 to be driven by the steering shaft 12, and the rack 14 that is driven by the rack-and-pinion gear 13 so as to turn a pair of turning wheels 10. The yaw-rate sensor 9 measures a real yaw rate of the vehicle, outputs the detected yaw rate Y1 corresponding to the real yaw rate, and inputs the detected yaw rate Y1 to the yaw rate controller 61. The higher-hierarchy controller 8 calculates a target route of the vehicle, outputs the target yaw rate Y0 for making the traveling route of the vehicle follow the calculated target route, and then inputs the target yaw rate Y0 to the yaw rate controller 61.

Based on the detected yaw rate Y1 obtained from the yaw-rate sensor 9 and the target yaw rate Y0 from the higher-hierarchy controller 8, the yaw rate controller 61 calculates the current command value Ic and then provides the current command value Ic to the motor control apparatus (unillustrated) for controlling the motor 2. The motor current Im is controlled by the motor control apparatus so as to follow the current command value Ic and is supplied to the motor 2. The motor 2 generates torque corresponding to the supplied motor current Im. The torque generated by the motor 2 is transferred to the steering shaft 12 through the intermediary of the motor-speed reduction gear 3 and is further transferred to the rack 14 through the intermediary of the rack-and-pinion gear 13. The rack 14 is driven in the axial direction thereof by the rack-and-pinion gear 13 so as to turn the pair of the turning wheels 10.

FIG. 9 is a configuration diagram of a yaw-rate controller in the vehicle steering system according to Embodiment 3; the configuration of the yaw rate controller 61 in which hysteresis compensation is introduced is represented. In FIG. 9, the yaw rate controller 61 has the hysteresis estimation unit 62, the addition unit 21, the deviation calculation unit 22, and the control unit 63. Based on an input value X3 to be inputted, the hysteresis estimation unit 62 calculates and outputs the hysteresis estimation value H2. The addition unit 21 adds the detected yaw rate Y1 and the hysteresis estimation value H2, and then outputs the addition value, as a compensation detected yaw rate Y2.

The deviation calculation unit 22 subtracts the compensation detected yaw rate Y2 from the target yaw rate Y0 and then outputs a control deviation ΔS. Based on the inputted control deviation ΔS, the target yaw rate Y0, and the compensation detected yaw rate Y2, the control unit 63 calculates the current command value Ic and then inputs the current command value Ic to the motor control apparatus for controlling the motor 2. The motor current Im flowing in the motor 2 is controlled by the motor control apparatus so as to follow the current command value Ic.

FIG. 10 is a configuration diagram of the hysteresis estimation unit in the vehicle steering system according to Embodiment 3. In FIG. 10, the hysteresis estimation unit 62 has a yaw-rate estimation unit 71 and a small-amplitude filtration filter 72. The yaw-rate estimation unit 71 inputs a yaw-rate estimation value Y3, calculated based on the input value X3, to the small-amplitude filtration filter 72. The small-amplitude filtration filter 72 outputs the hysteresis estimation value H2, based on the yaw-rate estimation value Y3 inputted from the yaw-rate estimation unit 71.

Because having a frequency responsiveness for making the input value X3 approach the real yaw rate, the yaw-rate estimation unit 71 raises the accuracy of hysteresis estimation by the hysteresis estimation unit 62. In Embodiment 3, as the input value X3 to be inputted to the hysteresis estimation unit 62, the target yaw rate Y0 is utilized. The reason therefor is that in the case where the responsiveness of the yaw-rate control is high, it can be assumed that the target yaw rate Y0 and the real yaw rate almost approximate to each other. In practice, because the real yaw rate follows the target yaw rate Y0 in a delayed manner, the yaw-rate estimation unit 71 makes an approximation of the follow-up delay.

Specifically, with regard to the real vehicle, the frequency responsiveness of the yaw rate controller 61 is measured so as to obtain the inherent frequency of the yaw rate controller 61; then, the target yaw rate Y0, as the input value X3, is processed through a lowpass filter having the inherent frequency, so that there is created the yaw-rate estimation value Y3 having a waveform approximate to the waveform of the real yaw rate. The yaw-rate estimation value Y3 to be outputted from the yaw-rate estimation unit 71 is for estimating nothing but the hysteresis of the sensor; therefore, it is not required that the yaw-rate estimation value Y3 is created with a high estimation accuracy to the extent that the yaw-rate estimation value Y3 completely coincide with the real yaw rate. As another example of the input value X3, the detected yaw rate Y1 from the yaw-rate sensor 9 may be utilized; alternatively, it may be allowed that the yaw rate is calculated based on a vehicle condition such as the acceleration, the vehicle speed, or the rotational difference between the right and left wheels and then is utilized as the input value.

Next, the control unit 63 will be explained. FIG. 11 is a configuration diagram of a control unit in the vehicle steering system according to each of Embodiments 3 and 4.

FIG. 11 is a configuration diagram of a control unit in the vehicle steering system according to each of Embodiments 3 and 4. In FIG. 11, the control unit 63 includes the first pseudo-differentiation device 51, the second pseudo-differentiation device 52, the first gain 53, the second gain 54, the third gain 55, the phase compensator 56, the addition unit 57, and the subtraction unit 58. The control unit 63 represented in FIG. 11 basically performs feedback control in such a way as to suppress the foregoing control deviation ΔS.

A target yaw rate speed YR0 is created from the target yaw rate Y0 by means of the first pseudo-differentiation device 51; a value obtained by multiplying the target yaw rate speed YR0 by the first gain 53 is inputted to the addition unit 57. A yaw-rate-speed command value YRc is created from the control deviation ΔS through processing by the second gain 54 and the phase compensator 56; then, the yaw-rate-speed command value YRc is inputted to the subtraction unit 58. The second gain 54 and the phase compensator 56 are designed in such a way as to create the yaw-rate-speed command value YRc in which desired stability and trackability to the control deviation ΔS are secured. A detected yaw rate speed YR1 is created from the compensation detected yaw rate Y2 through the second pseudo-differentiation device 52; then, the detected yaw rate speed YR1 is inputted to the subtraction unit 58.

The detected yaw rate speed YR1 is subtracted from the yaw-rate-speed command value YRc by the subtraction unit 58; a value calculated by multiplying the value, obtained through the subtraction, by the third gain 55 is inputted to the addition unit 57. The addition unit 57 adds a value obtained by multiplying the foregoing target yaw rate speed YR0 by the first gain 53 and a value obtained by multiplying a value, obtained by subtracting the detected yaw rate speed YR1 from the yaw-rate-speed command value YRc, by the third gain 55, and then outputs the added value, as the current command value Ic.

In order to raise the stability, the control unit 63 represented in FIG. 11 includes a major loop of feedback control utilizing the target yaw rate speed YR0 obtained from the target yaw rate Y0 and the yaw-rate-speed command value YRc obtained from the control deviation ΔS and a minor loop of feedback control utilizing the detected yaw rate speed YR1 obtained from the compensation detected yaw rate Y2 and the yaw-rate-speed command value YRc obtained from the control deviation ΔS. In addition, in the control unit 63, there is configured cascade control in which the feedback control utilizing the foregoing minor loop is added to the feedback control utilizing the foregoing major loop.

Because in the control unit 63 represented in FIG. 11, not the detected yaw rate Y1 but the compensation detected yaw rate Y2 to which hysteresis compensation has been provided is utilized, the effect of a hysteresis included in the detected yaw rate Y1 from the yaw-rate sensor 9 is reduced and hence the steering control can more accurately be performed. Moreover, in order to raise the responsiveness, feed-forward control of the target yaw rate speed YR0 is added.

As described above, Embodiment 3 makes it possible that in yaw-rate control in a vehicle steering system, the hysteresis in a yaw-rate sensor is estimated and compensated; thus, smooth steering in which the effect of the hysteresis is reduced can be performed.

In Embodiment 3, in the yaw rate controller 61, as explained in FIG. 9, the hysteresis estimation unit 62 creates the hysteresis estimation value H2; the addition unit 21 adds the detected yaw rate Y1 and the hysteresis estimation value H2 so as to create the compensation detected yaw rate Y2; then, the deviation calculation unit 22 subtracts the compensation detected yaw rate Y2 from the target yaw rate Y0 so as to create the control deviation ΔS. However, as the configuration in which the control deviation ΔS is created by use of the hysteresis estimation value H2, there exist configurations other than the one represented in FIG. 9.

FIG. 12 is explanatory diagrams representing various kinds of configuration examples in each of which a control deviation is created by use of a hysteresis estimation value, in the vehicle steering system according to each of Embodiments 3 and 4. The configuration represented in (a) of FIG. 12 corresponds to the configuration represented in FIG. 9; the hysteresis estimation value H2 is added to the detected yaw rate Y1 so that the compensation detected yaw rate Y2 is created; then, the compensation detected yaw rate Y2 is subtracted from the target yaw rate Y0 so that the control deviation ΔS is created.

It may be allowed that as the configuration represented in (b) of FIG. 12, which replaces the configuration represented in (a) of FIG. 12, the control deviation ΔS is created by subtracting the hysteresis estimation value H2 from a value obtained by subtracting the detected yaw rate Y1 from the target yaw rate Y0; alternatively, it may be allowed that as the configuration represented in (c) of FIG. 12, the hysteresis estimation value H2 is subtracted from the target yaw rate Y0 so that a compensation target yaw rate Y4 is created and then the detected yaw rate Y1 is subtracted from the compensation target yaw rate Y4 so that the control deviation ΔS is obtained. The configuration represented in each of (a), (b), and (c) of FIG. 12 provides the same effect.

Moreover, in Embodiment 3, the yaw-rate estimation unit 71 obtains the yaw-rate estimation value Y3 by use of a transfer function; however, it may be allowed that in order to reduce the calculation load, the yaw-rate estimation value Y3 is obtained by use of a mere gain. Furthermore, it may be allowed that in order to raise the estimation accuracy of the yaw-rate estimation unit 71, nonlinear processing such as saturation processing or dead-zone processing is performed.

Still moreover, as the hysteresis filter 41 in the small-amplitude filtration filter 72, a filter having an ideal hysteresis characteristic represented in FIG. 2A is utilized; it is important to make the characteristic of the hysteresis filter 41 coincide with the hysteresis characteristic of the steering angle sensor. For example, in the case where as represented in FIG. 2B, the hysteresis characteristic of the steering angle sensor has a shape in which in comparison with the hysteresis characteristic in FIG. 2A, the lower-right and upper-left corner portions of the hysteresis loop are suppressed, a hysteresis filter having a hysteresis characteristic coinciding with that particular hysteresis characteristic is utilized.

In addition, in the case where as represented in FIG. 2C, the hysteresis characteristic of the yaw-rate sensor has a dead zone in the vicinity of the origin, a hysteresis filter having a characteristic coinciding with that particular characteristic is utilized. As described above, the accuracy of the hysteresis estimation value H2 can be raised by making the hysteresis characteristic of the hysteresis filter 41 coincide with the hysteresis characteristic of the yaw-rate sensor.

In the above explanation, it is assumed that a hysteresis exists in the relationship between the yaw rate and the detected yaw rate; however, the generating factor of the hysteresis is not particularly limited. For example, even when the generation of the hysteresis is caused by the characteristic of the yaw-rate sensor itself, by a mechanical backlash of the steering mechanism for making the yaw-rate sensor rotate, or further by both thereof, the vehicle steering system according to Embodiment 3 can be utilized and the same effect can be demonstrated.

As described above, the vehicle steering system according to Embodiment 3 makes it possible that in yaw-rate control, the hysteresis in a yaw-rate sensor is estimated and compensated; thus, smooth steering in which the effect of the hysteresis is reduced can be performed.

### Embodiment 4.

Next, a vehicle steering system according to Embodiment 4 will be explained. In Embodiment 3, as described above, as the input value X3 to be inputted to the hysteresis estimation unit 6, the target yaw rate Y0 is utilized. However, in the case where the control responsiveness is low or under the environment in which disturbance such as friction exists, the difference between the target yaw rate Y0 and the yaw rate becomes large; therefore, in the configuration according to Embodiment 3, estimation of the hysteresis may become inaccurate. In Embodiment 4, the vehicle steering system is configured in such a way that estimation of a hysteresis is performed by inputting an input value other than a target yaw rate to the hysteresis estimation unit 62. Hereinafter, the vehicle steering system according to Embodiment 4 will be explained mainly with regard to the difference from the vehicle steering system according to Embodiment 3. FIGS. 8, 9, 10, 11, and 12 are applied also to the vehicle steering system according to Embodiment 4.

The hysteresis estimation unit 62 according to Embodiment 4 is configured in such a way that the hysteresis estimation value H2 is calculated by use of the detected yaw rate Y1, as the input value X3 represented in FIG. 10. With this configuration, estimation of the hysteresis cannot be performed in a hysteresis section where the detected yaw rate Y1 does not move; however, in the section out of the hysteresis section, the detected yaw rate Y1 moves. Accordingly, in the situation where the fluctuation of the steering angle is sufficiently larger than the hysteresis width, the hysteresis can be estimated and hence the hysteresis estimation value H2 can be obtained.

As a variant example of Embodiment 4, the hysteresis estimation value H2 may be calculated by use of a value based on the motor current Im, as the input value X3 to be inputted to the hysteresis estimation unit 62. In the case where there exists static friction between a road surface and a set of the steering mechanism and the turning wheels and the motor current Im is within a specific value, the static friction is large and hence the steering angle does not move; however, when the motor current Im exceeds the specific value, the steering angle overcomes the static friction and then starts to move. Because it is made possible to determine the occurrence of steering by use of the value of this motor current, as a current threshold value, the estimation of the hysteresis can more accurately be performed.

As described above, the vehicle steering system according to Embodiment 4 demonstrated an effect that even in the case where the difference between the target yaw rate and the yaw rate is large, it is made possible to estimate the hysteresis. In addition, as the input values, either a single kind of signal or two or more signals including a target yaw rate may be utilized so as to estimate the hysteresis.

Each of foregoing Embodiments 3 and 4 is obtained by converting the vehicle steering system, described in one of the items (11) through (14) below, into a tangible form.
(11) A vehicle steering system comprising:
   a steering mechanism that drives a vehicle;
   a motor that makes the steering mechanism rotate;
   a yaw-rate sensor that detects a yaw rate of the vehicle and outputs a detected yaw rate having a hysteresis with respect to the yaw rate;
   a hysteresis estimation unit that estimates a hysteresis estimation value corresponding to a difference between the yaw rate and the detected yaw rate; and
   a control unit that controls the motor in such a way as to be equal to a difference between the yaw rate and a target yaw rate, which is a target value of the yaw rate, based on the target yaw rate, the detected yaw rate, and the hysteresis estimation value.
   In the vehicle steering system configured in such a manner as described above, compensation is made so as to cancel the hysteresis of the yaw-rate sensor; thus, yaw-rate control can smoothly be performed.
(12) The vehicle steering system according to (11),
   wherein the hysteresis estimation unit estimates the hysteresis estimation value corresponding to a difference obtained by subtracting the detected yaw rate from the yaw rate, and
   wherein the control unit is configured in such a way as to control the motor, based on a value obtained by subtracting the detected yaw rate and the hysteresis estimation value from the target yaw rate.
   In the vehicle steering system configured in such a manner as described above, addition and subtraction according to the foregoing signs are applied to the target yaw rate, the detected yaw rate, and the hysteresis estimation value, so that the control deviation becomes a value equal to the difference between the target yaw rate and the yaw rate; thus, there is demonstrated an effect that yaw-rate control utilizing a desirable deviation input can be performed.
(13) The vehicle steering system according to any one of (11) and (12), wherein the hysteresis estimation unit has a yaw-rate estimation unit for estimating a response of the yaw rate to an input value to the hysteresis estimation unit and is configured in such a way as to calculate the hysteresis estimation value, based on a yaw-rate estimation value to be outputted from the yaw-rate estimation unit.
   In the vehicle steering system configured in such a manner as described above, the input value is converted into a signal corresponding to the yaw rate, so that the accuracy of hysteresis estimation can be raised.
(14) The vehicle steering system according to any one of (11) and (12), wherein the hysteresis estimation unit has a yaw-rate estimation unit for outputting a yaw-rate estimation value whose high-frequency phase is delayed with respect to the target yaw rate, and is configured in such a way as to calculate the hysteresis estimation value, based on the yaw-rate estimation value.
   In the vehicle steering system configured in such a manner as described above, a frequency response for making the target yaw rate approach the yaw rate is added, so that the accuracy of hysteresis estimation can be raised.

Although the present application is described above in terms of various exemplary embodiments and implementations, it should be understood that the various features, aspects and functions described in one or more of the individual embodiments are not limited in their applicability to the particular embodiment with which they are described, but instead can be applied, alone or in various combinations to one or more of the embodiments as defined by the appended claims.

FIG. 13 is a block diagram representing the hardware configuration of each of the steering-angle controller according to Embodiment 1 and the yaw-rate controller according to Embodiment 2. As illustrated in FIG. 13, each of the steering-angle controller 5 according to Embodiment 1 and the yaw-rate controller 61 according to Embodiment 2 includes a processor 1000 and a storage apparatus 1001. Although not illustrated, the storage apparatus 1001 has a volatile storage device such as a random access memory and a nonvolatile auxiliary storage device such as a flash memory. Additionally, instead of the flash memory, a hard disk may be included as the auxiliary storage device. The processor 1000 implements a program inputted from the storage device 1001. In this case, the program is inputted from the auxiliary storage device to the processor 1000 by way of the volatile storage device. Moreover, the processor 1000 may output data such as a calculation result either to the volatile storage device of the storage device 1001 or to the auxiliary storage device by way of the volatile storage device. In addition, it may be allowed that in the steering-angle controller 5 according to Embodiment 1, only each of the hysteresis estimation unit 6 and the control unit 7 has the hardware configuration illustrated in FIG. 13 and/or that in the yaw-rate controller 61 according to Embodiment 2, only each of the hysteresis estimation unit 62 and the control unit 63 has the hardware configuration illustrated in FIG. 13.

### Description of Reference Numerals

100, 200: vehicle steering system
1: steering mechanism
2: motor
3: motor-speed reduction gear
4: steering angle sensor
5: steering-angle controller
6, 62: hysteresis estimation unit
7, 63: control unit
8: higher-hierarchy controller
9: yaw-rate sensor
10: turning wheel
11: steering wheel
12: steering shaft
13: rack-and-pinion gear
14: rack
21, 57: addition unit
22: deviation calculation unit
31: steering-angle estimation unit
32, 72: small-amplitude filtration filter
41: hysteresis filter
23, 42: subtractor
51: first pseudo-differentiation device
52: second pseudo-differentiation device
53: first gain
54: second gain
55: third gain
56: phase compensator
58: subtraction unit
61: yaw rate controller
71: yaw-rate estimation unit
1000: processor
1001: storage apparatus

## Claims

1. A vehicle steering system comprising:
a steering mechanism (1) that drives a vehicle;
a motor (2) that makes the steering mechanism (1) rotate;
a steering angle sensor (4) that detects a steering angle, which is a rotation angle of the steering mechanism (1), and outputs a detected steering angle having a hysteresis with respect to the steering angle;
a hysteresis estimation unit (6) that estimates a hysteresis estimation value corresponding to a difference between the steering angle and the detected steering angle; and
a control unit (7) that controls the motor (2) in such a way as to be equal to a difference between the steering angle and a target steering angle, which is a target value of the steering angle, based on the target steering angle, the detected steering angle, and the hysteresis estimation value;
**characterized in that** the hysteresis estimation unit (6) is configured in such a way as to calculate the hysteresis estimation value, based on a yaw rate of the vehicle.

2. The vehicle steering system according to claim 1,
wherein the hysteresis estimation unit (6) is configured in such a way as to estimate the hysteresis estimation value corresponding to a difference obtained by subtracting the detected steering angle from the steering angle, and
wherein the control unit (7) is configured in such a way as to control the motor (2), based on a value obtained by subtracting the detected steering angle and the hysteresis estimation value from the target steering angle.

3. The vehicle steering system according to any one of claims 1 through 2, wherein the hysteresis estimation unit (6) has a steering-angle estimation unit (31) for estimating a response of the steering angle to an input value to the hysteresis estimation unit (6) and is configured in such a way as to calculate the hysteresis estimation value, based on a steering-angle estimation value to be outputted from the steering-angle estimation unit (31).

4. The vehicle steering system according to any one of claims 1 through 2, wherein the hysteresis estimation unit (6) has a steering-angle estimation unit (31) for outputting a steering-angle estimation value whose high-frequency phase is delayed with respect to the target steering angle, and is configured in such a way as to calculate the hysteresis estimation value, based on the steering-angle estimation value.

5. The vehicle steering system according to any one of claims 1 through 4,
wherein the hysteresis estimation unit (6) has a small-amplitude filtration filter (32), and
wherein the small-amplitude filtration filter (32) includes a hysteresis filter (41) for performing hysteresis-function processing having a hysteresis width corresponding to the hysteresis and a subtractor that subtracts an output signal of the hysteresis filter (41) from an input signal of the hysteresis filter (41).

6. The vehicle steering system according to any one of claims 1 through 5, wherein the hysteresis estimation unit (6) is configured in such a way as to compensate a hysteresis of the steering angle sensor (4) itself.

7. A vehicle steering system comprising:
a steering mechanism (1) that drives a vehicle;
a motor (2) that makes the steering mechanism (1) rotate;
a yaw-rate sensor (9) that detects a yaw rate of the vehicle and outputs a detected yaw rate having a hysteresis with respect to the yaw rate;
a hysteresis estimation unit (62) that estimates a hysteresis estimation value corresponding to a difference between the yaw rate and the detected yaw rate; **characterized by**
a control unit (63) that controls the motor (2) in such a way as to be equal to a difference between the yaw rate and a target yaw rate, which is a target value of the yaw rate, based on the target yaw rate, the detected yaw rate, and the hysteresis estimation value;
wherein the hysteresis estimation unit (63) has a yaw-rate estimation unit for estimating a response of the yaw rate to an input value to the hysteresis estimation unit (63) and is configured in such a way as to calculate the hysteresis estimation value, based on a yaw-rate estimation value to be outputted from the yaw-rate estimation unit (71).

8. The vehicle steering system according to claim 7,
wherein the hysteresis estimation unit (62) estimates the hysteresis estimation value corresponding to a difference obtained by subtracting the detected yaw rate from the yaw rate, and
wherein the control unit (63) is configured in such a way as to control the motor (2), based on a value obtained by subtracting the detected yaw rate and the hysteresis estimation value from the target yaw rate.

## Patentansprüche

1. Fahrzeuglenksystem umfassend:
einen Lenkmechanismus (1), der ein Fahrzeug antreibt;
einen Motor (2), der den Lenkmechanismus (1) in Rotation versetzt;
einen Lenkwinkelsensor (4), der einen Lenkwinkel erfasst, der ein Drehwinkel des Lenkmechanismus (1) ist, und einen erfassten Lenkwinkel ausgibt, der eine Hysterese in Bezug auf den Lenkwinkel aufweist;
eine Hysterese-Schätzeinheit (6), die einen Hysterese-Schätzwert schätzt, der einer Differenz zwischen dem Lenkwinkel und dem erfassten Lenkwinkel entspricht; und
eine Steuereinheit (7), die den Motor (2) so steuert, dass er gleich einer Differenz zwischen dem Lenkwinkel und einem Ziellenkwinkel ist, bei dem es sich um einen Zielwert des Lenkwinkels handelt, der auf dem Ziellenkwinkel, dem erfassten Lenkwinkel und dem Hysterese-Schätzwert basiert;
**dadurch gekennzeichnet, dass** die Hysterese-Schätzeinheit (6) so konfiguriert ist, dass sie den Hysterese-Schätzwert auf der Grundlage einer Gierrate des Fahrzeugs berechnet.

2. Fahrzeuglenksystem nach Anspruch 1,
wobei die Hysterese-Schätzeinheit (6) so konfiguriert ist, dass sie den Hysterese-Schätzwert schätzt, der einer Differenz entspricht, die durch Subtrahieren des erfassten Lenkwinkels vom Lenkwinkel erhalten wird, und
wobei die Steuereinheit (7) so konfiguriert ist, dass sie den Motor (2) steuert, basierend auf einem Wert, der durch Subtrahieren des erkannten Lenkwinkels und des Hysterese-Schätzwerts von dem angestrebten Lenkwinkel erhalten wird.

3. Fahrzeuglenksystem nach einem der Ansprüche 1 bis 2, wobei die Hysterese-Schätzeinheit (6) eine Lenkwinkel-Schätzeinheit (31) zum Abschätzen einer Reaktion des Lenkwinkels auf einen Eingabewert für die Hysterese-Schätzeinheit (6) aufweist und so konfiguriert ist, dass sie den Hysterese-Schätzwert berechnet, auf der Grundlage eines Schätzwerts für den Lenkwinkel, der von der Lenkwinkel-Schätzeinheit (31) ausgegeben wird.

4. Fahrzeuglenksystem nach einem der Ansprüche 1 bis 2, wobei die Hysterese-Schätzeinheit (6) eine Lenkwinkel-Schätzeinheit (31) zur Ausgabe eines Lenkwinkel-Schätzwertes aufweist, dessen hochfrequente Phase in Bezug auf den Ziellenkwinkel verzögert ist, und so konfiguriert ist, dass der Hysterese-Schätzwert berechnet wird, basierend auf dem Lenkwinkel-Schätzwert.

5. Fahrzeuglenksystem nach einem der Ansprüche 1 bis 4,
wobei die Hysterese-Schätzungseinheit (6) einen Filtrationsfilter (32) mit kleiner Amplitude aufweist, und
wobei der Filtrationsfilter (32) mit kleiner Amplitude einen Hysteresefilter (41) zur Durchführung einer Hysteresefunktionsverarbeitung mit einer Hysteresebreite aufweist, die der Hysterese entspricht, und einen Subtraktor, der ein Ausgangssignal des Hysteresefilters (41) von einem Eingangssignal des Hysteresefilters (41) subtrahiert.

6. Fahrzeuglenksystem nach einem der Ansprüche 1 bis 5, wobei die Hysterese-Schätzeinheit (6) so konfiguriert ist, dass sie eine Hysterese des Lenkwinkelsensors (4) selbst kompensiert.

7. Fahrzeuglenksystem umfassend:
einen Lenkmechanismus (1), der ein Fahrzeug antreibt;
einen Motor (2), der den Lenkmechanismus (1) in Rotation versetzt;
einen Gierratensensor (9), der eine Gierrate des Fahrzeugs erfasst und eine erfasste Gierrate ausgibt, deren Hysterese sich auf die Gierrate bezieht;
eine Hysterese-Schätzeinheit (62), die einen Hysterese-Schätzwert schätzt, der einer Differenz zwischen der Gierrate und der detektierten Gierrate entspricht; **gekennzeichnet durch**
eine Steuereinheit (63), die den Motor (2) so steuert, dass er gleich einer Differenz zwischen der Gierrate und einer Ziel-Gierrate ist, die ein Zielwert der Gierrate ist, der auf der Zielgierrate, der erfassten Gierrate und dem Hysterese-Schätzwert basiert;
wobei die Hysterese-Schätzeinheit (63) eine Gierraten-Schätzeinheit zum Abschätzen einer Reaktion der Gierrate auf einen Eingabewert für die Hysterese-Schätzeinheit (63) aufweist und so konfiguriert ist, dass sie den Hysterese-Schätzwert berechnet, basierend auf einem Gierraten-Schätzwert, der von der Gierraten-Schätzeinheit (71) ausgegeben werden soll.

8. Fahrzeuglenksystem nach Anspruch 7,
wobei die Hysterese-Schätzeinheit (62) den Hysterese-Schätzwert schätzt, der einer Differenz entspricht, die durch Subtrahieren der erfassten Gierrate von der Gierrate erhalten wird, und
wobei die Steuereinheit (63) so konfiguriert ist, dass sie den Motor (2) steuert, basierend auf einem Wert, der durch Subtrahieren der erfassten Gierrate und des Hysterese-Schätzwerts von der Zielgierrate erhalten wird.

## Revendications

1. Un système de direction de véhicule comprenant
un mécanisme de direction (1) qui entraîne un véhicule ;
un moteur (2) qui fait tourner le mécanisme de direction (1) ;
un capteur d'angle de direction (4) qui détecte un angle de direction, qui est un angle de rotation du mécanisme de direction (1), et émet un angle de direction détecté ayant une hystérésis par rapport à l'angle de direction ;
une unité d'estimation d'hystérésis (6) qui estime une valeur d'estimation d'hystérésis correspondant à une différence entre l'angle de direction et l'angle de direction détecté ; et
une unité de commande (7) qui commande le moteur (2) de manière à être égal à une différence entre l'angle de direction et un angle de direction cible, qui est une valeur cible de l'angle de direction, sur la base de l'angle de direction cible, de l'angle de direction détecté et de la valeur d'estimation d'hystérésis ;
**caractérisé en ce que** l'unité d'estimation d'hystérésis (6) est configurée de manière à calculer la valeur d'estimation d'hystérésis sur la base d'un taux de lacet du véhicule.

2. Le système de direction de véhicule selon la revendication 1,
dans lequel l'unité d'estimation d'hystérésis (6) est configurée de manière à estimer la valeur d'estimation d'hystérésis correspondant à une différence obtenue en soustrayant l'angle de direction détecté de l'angle de direction, et
dans lequel l'unité de commande (7) est configurée de manière à commander le moteur (2) sur la base d'une valeur obtenue en soustrayant l'angle de direction détecté et la valeur d'estimation d'hystérésis de l'angle de direction cible.

3. Le système de direction de véhicule selon l'une quelconque des revendications 1 à 2, dans lequel l'unité d'estimation d'hystérésis (6) comporte une unité d'estimation d'angle de direction (31) pour estimer une réponse de l'angle de direction à une valeur d'entrée de l'unité d'estimation d'hystérésis (6) et est configurée de manière à calculer la valeur d'estimation d'hystérésis, sur la base d'une valeur d'estimation d'angle de direction devant être émise par l'unité d'estimation d'angle de direction (31).

4. Le système de direction de véhicule selon l'une quelconque des revendications 1 à 2, dans lequel l'unité d'estimation d'hystérésis (6) comporte une unité d'estimation d'angle de direction (31) pour émettre une valeur d'estimation d'angle de direction dont une phase de haute fréquence est retardée par rapport à l'angle de direction cible, et est configurée de manière à calculer la valeur d'estimation d'hystérésis, sur la base de la valeur d'estimation d'angle de direction.

5. Le système de direction de véhicule selon l'une quelconque des revendications 1 à 4,
dans lequel l'unité d'estimation d'hystérésis (6) comporte un filtre de filtrage de faible amplitude (32), et
dans lequel le filtre de filtrage de faible amplitude (32) comprend un filtre à hystérésis (41) pour effectuer un traitement de fonction d'hystérésis ayant une largeur d'hystérésis correspondant à l'hystérésis et un soustracteur qui soustrait un signal de sortie du filtre à hystérésis (41) d'un signal d'entrée du filtre à hystérésis (41).

6. Le système de direction de véhicule selon l'une quelconque des revendications 1 à 5, dans lequel l'unité d'estimation d'hystérésis (6) est configurée de manière à compenser une hystérésis du capteur d'angle de direction (4) lui-même.

7. Un système de direction de véhicule comprenant :
un mécanisme de direction (1) qui entraîne un véhicule ;
un moteur (2) qui fait tourner le mécanisme de direction (1) ;
un capteur de taux de lacet (9) qui détecte un taux de lacet du véhicule et émet un taux de lacet détecté présentant une hystérésis par rapport au taux de lacet ;
une unité d'estimation d'hystérésis (62) qui estime une valeur d'estimation d'hystérésis correspondant à une différence entre le taux de lacet et le taux de lacet détecté ; **caractérisé par**
une unité de commande (63) qui commande le moteur (2) de manière à être égal à une différence entre le taux de lacet et un taux de lacet cible, qui est une valeur cible du taux de lacet, sur la base du taux de lacet cible, du taux de lacet détecté et de la valeur d'estimation d'hystérésis ;
l'unité d'estimation d'hystérésis (63) possédant une unité d'estimation de taux de lacet pour estimer une réponse du taux de lacet à une valeur d'entrée de l'unité d'estimation d'hystérésis (63) et est configurée de manière à calculer la valeur d'estimation d'hystérésis, sur la base d'une valeur d'estimation de taux de lacet devant être émise par l'unité d'estimation de taux de lacet (71).

8. Le système de direction de véhicule selon la revendication 7,
dans lequel l'unité d'estimation d'hystérésis (62) estime la valeur d'estimation d'hystérésis correspondant à une différence obtenue en soustrayant le taux de lacet détecté du taux de lacet, et
dans lequel l'unité de commande (63) est configurée de manière à commander le moteur (2) sur la base d'une valeur obtenue en soustrayant le taux de lacet détecté et la valeur d'estimation d'hystérésis du taux de lacet cible.
